# EUROPÄISCHE PATENTSCHRIFT

(11) **EP 0 635 457 B1**
(45) Veröffentlichungstag und Bekanntmachung des Hinweises auf die Patenterteilung: **29.01.1997**
(21) Anmeldenummer: 94202060.3
(22) Anmeldetag: 15.07.1994
(51) Int. Cl.: C01G 9/08, C01G 1/12

(54) **Verfahren zur Herstellung von ZnS-Partikeln**
Process for the preparation of zinc sulfide particles
Procédé de préparation de particules de sulfure de zinc

(30) Priorität: 22.07.1993 DE 4324594
(43) Veröffentlichungstag der Anmeldung: 25.01.1995
(73) Patentinhaber: Philips Patentverwaltung GmbH, 22335 Hamburg (DE); PHILIPS ELECTRONICS N.V., 5621 BA Eindhoven (NL)
(72) Erfinder: Bredol, Michael, Dr., D-20097 Hamburg (DE); Merikhi, Jaqueline, D-20097 Hamburg (DE); Ronda, Cornelis, Dr., D-20097 Hamburg (DE)
(74) Vertreter: Rooda, Hans

(56) Entgegenhaltungen:
- PATENT ABSTRACTS OF JAPAN vol. 4, no. 7 (C-070) 19. Januar 1980 & JP-A-54 142 197 (TOSHIBA CORP)
- CHEMICAL ABSTRACTS, vol. 116, no. 24, 15. Juni 1992, Columbus, Ohio, US; abstract no. 242466, OSAKADA Seite 465 ;
- CHEMICAL ABSTRACTS, vol. 108, no. 4, 25. Januar 1988, Columbus, Ohio, US; abstract no. 30021y, DEV S. Seite 556 ;

## Beschreibung

Die Erfindung bezieht sich auf ein Verfahren zur Herstellung von ZnS-Partikeln durch naßchemische Fällung aus wäßrigen Zinksalzlösungen, wobei ZnS auf in die Fällösung eingebrache Keime gefällt wird.

ZnS-Partikel werden mit entsprechenden Dotierstoffen als Leuchtstoffe (blau,grün) in Farbbildröhren verwendet. Für die Herstellung von hochwertigen Leuchtstoffstreifen oder -punkten ist es wesentlich, daß die Leuchtstoffpartikel möglichst dicht und gleichmäßig aufgebracht werden. Die Korngrößen der Partikel sollten gewisse Grenzwerte nicht überschreiten. Die Größenverteilung sollte dabei möglichst eng sein.

ZnS-Rohstoffe für die Herstellung von Leuchtstoffen werden im Allgemeinen durch naßchemische Fällung aus Zn-Salz-Lösungen durch Einleitung von Schwefelwasserstoff-Gas hergestellt. Dabei ergibt sich die Schwierigkeit, daß die kontinuierlich freigesetzte Säure des Gegenanions des Zn-Salzes den pH-Wert kontinuierlich erniedrigt. Das führt zu Ausbeuteverlusten (bezogen auf die eingesetzte Zn-Menge) und zu kolloidchemisch instabilen Verhältnissen während der Reaktion, falls im Verlauf der Reaktion isoelektrische Punkte durchlaufen werden. Darüberhinaus verläuft die Fällungsreaktion auch sehr schnell, so daß die inhomogene Verteilung der Reaktanden, wie sie durch die Zugabe von Lösung oder Gas zwangsläufig entsteht, zu inhomogenen Reaktionsbedingungen und damit zu einem uneinheitlichen Produkt führt. Des weiteren machen solche Verhältnisse die Kontrolle der Keimbildung unmöglich; diese jedoch ist der kritische Vorgang zur Kontrolle der Morphologie des Präzipitats.

Ein Verfahren der eingangs genannten Art ist durch DE-A 1 467 316 bekannt. Die Keime werden dort einer Fällungslösung als Bestandteile einer wässrigen Suspension zugegeben.

Wenn Keime mit enger Größenverteilung in die Fällösung eingebracht werden, weisen auch die sich auf den Keimen bildenden ZnS-Partikel eine etwa gleich enge Größenverteilung auf, wobei die Korngröße beim weiteren Herstellungsprozeß durch geeignete Wahl der Glühtemperatur und durch Zusatz geeigneter Schmelzmittel beeinflußt werden kann. Die endgültige Größe und Größenverteilung der ZnS-Partikel ist wesentlich von der Größe, Größenverteilung und Art der Keime abhängig. Ebenso spielt die Oberflächenchemie der Keime eine sehr große Rolle.

Der Erfindung liegt die Aufgabe zugrunde, das Verfahren der eingangs genannten Art derart zu gestalten, daß ZnS auf in kontrollierter Größe und Größenverteilung vorliegende Keime gefällt wird.

Die Lösung gelingt dadurch, daß die Keime der wäßrigen Fällungslösung in Form eines die Keime enthaltenden wasserlöslichen Organosols zugegeben werden.

Das erfindungsgemäße Verfahren ist insbesondere zur Herstellung von ZnS-Rohstoffen für feinteiliges Phosphormaterial (Korngrößen 1 bis 2 µm) geeignet.

Keime dürfen an sich aus beliebigem Stoff bestehen, jedoch sind bestimmte Stoffe für bestimmte organische Lösungen der Organosole besonders geeignet. Eine Auswahl sollte im Hinblick darauf erfolgen, daß sich ein stabiles Organosol ergibt, in welchem die Anzahl und Größenverteilung der Keime möglichst lange Zeit erhalten bleibt. Die Keime sollten nicht agglomerieren oder zumindest nur lose Anhäufungen bilden, welche sich beim späteren Fällungsvorgang auflösen.

Wenn ZnS beim Fällungsablauf praktisch ausschließlich auf Keime präzipitieren soll, müssen die Reagenzien während der Wachstumsphase zur Vermeidung von Übersättigung in kontrollierter Weise (z.B. geregelte Gasströme) zugegeben werden, damit keine weiteren Keime entstehen können.

Auch bei der Herstellung des Organosols sollten keimbildende Reagenzien in dosierter Menge kontrolliert zugegeben werden, damit eine gewünschte Anzahl, Größe und enge Größenverteilung der Keime gezielt erreicht werden kann. Geeignete Verfahrensparameter lassen sich vorteilhaft durch Vorversuche finden.

Im organischen Medium entstehen stabile Keimsole, welche zumindest bei Kühlung ohne Veränderung der Eigenschaften längere Zeit lagerfähig sind. Erfindungsgemäß verwendete Organosole können konzentriert separat vom späteren Fällungsprozeß hergestellt werden. Es können Organosole mit einer Vielzahl von Keimtypen dargestellt werden. Beispielsweise können auch Keime realisiert werden, die eine Funktion als Aktivatormaterialien erfüllen. Für die Auswahl der Keimtypen ist es wesentlich, geeignete Vorläufermaterialien zu finden, die im gewählten Lösungsmittel gut löslich sind und wasserfrei erhältlich sind (Acetate, Acetylacetonate usw.).

Besonders geeignete Organosole lassen sich mit DMF bilden. Dann werden die Keime auch im Verlaufe längerer Lagerzeiten stabil in der kontrolliert bewirkten Verteilung gehalten.

Bei mangelhafter Stabilität kann häufig handelsüblicher oberflächenaktiver Zusatz (Sulfonsäureseifen wie AOT etc.) abhelfen.

Als vergleichbar vorteilhaft hat sich Dimethylsulfoxid (DMSO) erwiesen.

Auch mit Aceton läßt sich ein für die Erfindung geeignetes Organosol herstellen.

Die folgenden Ausführungsbeispiele haben sich als vorzugsweise geeignet erwiesen. Die dabei angegebenen Konzentrationen und Reaktionszeiten können natürlich zur Erzielung geänderter Partikelgrößen angepaßt und variiert werden. Die erhaltenen ZnS-Pulver können mittels eines der bekannten Verfahren zu Leuchtstoffen weiterverarbeitet werden. Vorzugsweise werden die erfindungsgemäß erhaltenen ZnS-Pulver mit Dotierstoffen und elementarem Schwefel zu einer wäßrigen Suspension vermischt, welche nachfolgend eingetrocknet wird. Das entstandene Pulver wird dann unter Sauerstoffabschluß auf 980°C für typisch 90 min erhitzt.

### Beispiel 1:

2g Cu(II)acetat (wasserfrei) wurden in 150 ml trockenem Dimethylformamid (DMF) gelöst. Über einen Zeitraum von 90 min wurden etwa 750 ml H₂S bei Atmosphärendruck im Gemisch mit Argon (1:1) in diese Lösung eingeleitet. Die Lösung wurde danach durch ein feinporiges Filter gegeben (200 nm Membranfilter), um sie von eventuell ausgeflocktem Cu₂S zu befreien. Von dieser Vorratslösung wurde ein Teil hundertfach mit DMF verdünnt. Diese Lösung enthielt die gewünschten Keime in einer geeigneten Konzentration. 16 ml dieser Lösung wurden zu einer Lösung von 29,4 g ZnSO₄*7H₂O in 150 ml Wasser gegeben. Es entstand eine hellgrüne, klare Lösung, über die unter starkem Rühren ein H₂S/Ar-Gemisch (1:1) mit einer Geschwindigkeit von 0,17 ml/s H₂S geleitet wurde. Es setzte sofortige Trübung ein. Nach 4,25 h wurde die Begasung beendet und das Produkt durch Filtration isoliert. Es entstand ein sehr feinteiliges Pulver mit Partikelgrößen von etwa 200 nm. Nach dem Trocknen wurde es in der oben angedeuteten Weise zu Phosphor aktiviert und gebrannt. Das Ergebnis war ein feinteiliges Phosphorpulver (1-2µm) mit sehr geringer Breite der Korngrößenverteilung.

### Beispiel 2:

3,4 g N-Dimethyldithiozinkcarbamat (C₆H₁₂N₂S₄Zn) wurden in 250 ml trockenem DMF gelöst. Ein H₂S/Ar-Gemisch (2:1) wurde mit einer Geschwindigkeit von 0,34 ml/sH₂S für 30 min in diese Lösung eingeleitet. Die entstehende gelbe, trübe Lösung wurde durch ein engporiges Filter gegeben (z.B. 200 nm Membranfilter). Von der erhaltenen klaren, gelben Lösung wurden 125 ml zu einer Lösung von 25,7g ZnSO₄*7H₂O un 100 ml Wasser gegeben. Über die entstandenen klare, gelbliche Lösung wurde 3 h lang ein H₂S/Ar-Gemisch (1:1) mit einer Geschwindigkeit von 0,17 ml/s H₂S unter starkem Rühren geleitet. Nach Filtration ergab sich ein sehr feinteiliges Pulver mit Partikelgrößen von etwa 200 nm. Nach dem Trocknen wurde es in der oben angedeuteten Weise zu Phosphor aktiviert und gebrannt. Es entstand ein feinteiliges Phosphorpulver (1-2µm) mit sehr geringer Breite der Korngrößenverteilung.

### Beispiel 3:

Aus festem Schwefel und Aceton wurde eine gesättigte Lösung von S in Aceton hergestellt. Der S-Gehalt betrug etwa 90mg in 100ml Aceton (bei üblicher Restfeuchte). Von dieser Lösung wurden 8,8 ml in gerührte 0,6-Molare ZnSO₄-Lösung gegeben (1,51). Es entstand ein Sol, das die typischen Erscheinungen der Rayleigh-Streuung zeigte, nämlich blauen Schimmer bei Betrachtung senkrecht zu durchfallendem Tageslicht. Aus der so vorbereiteten Lösung konnte in üblicher Weise ZnS durch Überleiten von H₂S ausgefällt und isoliert werden.

Bei diesem Ausführungsbeispiel handelt es sich um die Erzeugung von S-Keimen, auf die dann ZnS abgeschieden werden kann. Bei der Ausgangslösung handelt es sich nicht um ein partikuläres Sol, sondern um eine gesättigte Lösung. Die Keimbildung erfolgt durch Zugabe von ZnSO₄-Lösung oder auch durch Zugabe von Wasser, wodurch die Lösbarkeit von S verringert wird. Bei der vorteilhaften Eingabe von S-Lösung in vorbereitete ZnSO₄-Lösung entstehen Keime in situ. Diese besitzen eine für die weiteren Verfahrensschritte vorteilhafte Oberflächenchemie.

## Patentansprüche

1. Verfahren zur Herstellung von ZnS-Partikeln durch naßchemische Fällung aus wäßrigen Zinksalzlösungen, wobei ZnS auf in die Fällösung eingebrachte Keime gefällt wird,
dadurch gekennzeichnet, daß die Keime der wässrigen Fällungslösung in Form eines die Keime enthaltenden wasserlöslichen Organosols zugegeben werden.

2. Verfahren nach Anspruch 1,
dadurch gekennzeichnet, daß bei der Herstellung des Organosols einem wasserlöslichen organischen Lösungsmittel keimbildende Reagenien während einer Reaktionszeit in dosierter Menge zugegeben werden.

3. Verfahren nach Anspruch 1 oder 2,
dadurch gekennzeichnet, daß Organosol mit Dimethylformamid (DMF) gebildet wird.

4. Verfahren nach Anspruch 1 oder 2,
dadurch gekennzeichnet, daß das Organosol mit Dimethylsulfoxid (DMSO) gebildet wird.

5. Verfahren nach Anspruch 1 oder 2,
dadurch gekennzeichnet, daß das Organosol mit Aceton gebildet wird.

6. Verfahren nach Anspruch 3,
dadurch gekennzeichnet, daß zur Herstellung des Organosols Cu(II) Acetat (wasserfrei) in trockenem DMF gelöst wird, daß in diese Lösung ein H₂S/Ar-Gemisch eingeleitet wird, und daß diese Lösung danach gefiltert wird.

7. Verfahren nach Anspruch 3,
dadurch gekennzeichnet, daß zur Herstellung des Organosols N-Dimethyldithiozinkcarbamat (C₆H₁₂N₂S₄Zn) in trockenem DMF gelöst wird, daß H₂S in die Lösung eingeleitet wird, welche danach gefiltert und einer wässrigen ZnSO₄-Lösung zugegeben wird, und daß danach ein H₂S/Ar-Gemisch unter starkem Rühren eingeleitet wird.

8. Verfahren nach Anspruch 5,
daß zur Herstellung eines Keimsols eine gesättigte Losung aus Schwefel und Aceton gebildet wird, welche danach in eine wässrige ZnS-Lösung gegeben wird.

9. Verfahren nach einem der Ansprüche 1 bis 8,
daß das Organosol zur naßchemischen Füllung von ZnS auf die Keime einer wässrigen Zinksalzlösung zugegeben wird, und daß danach ein H₂S/Ar-Gemisch eingeleitet wird.

10. Verfahren nach einem der Ansprüche 1 bis 9,
dadurch gekennzeichnet, daß die erhaltenen ZnS-Partikel zu einem Pulver getrocknet und danach unter Zugabe von Dotierstoffen und/oder elementarem Schwefel bei Erhitzung unter Sauerstoffabschluß zu Leuchtstoffen weiterverarbeitet werden.

## Claims

1. A method of manufacturing ZnS particles by wet-chemical precipitation from aqueous zinc salt solutions whereby ZnS is precipitated on nuclei introduced into the precipitation solution, characterized in that the nuclei of the aqueous precipitation solution are added in the form of an organosol which contains the nuclei and is soluble in water.

2. A method as claimed in Claim 1, characterized in that nucleating reactants are added in a dosed quantity to a water-soluble organic solvent during a reaction time in the manufacture of the organosol.

3. A method as claimed in Claim 1 or 2, characterized in that the organosol is formed with dimethyl formamide (DMF).

4. A method as claimed in Claim 1 or 2, characterized in that the organosol is formed with dimethyl sulphoxide (DMSO).

5. A method as claimed in Claim 1 or 2, characterized in that the organosol is formed with acetone.

6. A method as claimed in Claim 3, characterized in that for the preparation of the organosol Cu(II) acetate (free from water) is dissolved in dry DMF, in that a H₂S/Ar mixture is introduced into this solution, and in that the solution is subsequently filtered.

7. A method as claimed in Claim 3, characterized in that for the preparation of the organosol N-dimethyl dithiozinc carbamate (C₆H₁₂N₂S₄Zn) is dissolved in dry DMF, in that H₂S is introduced into this solution, which is subsequently filtered and added to an aqueous ZnSO₄ solution, and in that subsequently a H₂S/Ar mixture is introduced under vigorous stirring.

8. A method as claimed in Claim 5, characterized in that for the preparation of a sol of nuclei a saturated solution is prepared with sulphur and acetone, which solution is subsequently added to an aqueous ZnS solution.

9. A method as claimed in any one of the Claims 1 to 8, characterized in that the organosol is added to an aqueous zinc salt solution for the wet-chemical precipitation of ZnS onto the nuclei, and in that subsequently a H₂S/Ar mixture is introduced.

10. A method as claimed in any one of the Claims 1 to 9, characterized in that the ZnS particles obtained are dried into a powder and are subsequently processed into ZnS phosphors through heating under exclusion of oxygen with the addition of dopants and/or elementary sulphur.

## Revendications

1. Procédé pour la fabrication de particules de ZnS par précipitation chimique par voie humide à partir de solutions de sel de zinc aqueuses, le ZnS étant précipité sur des germes introduits dans la solution de précipitation, caractérisé en ce que les germes sont ajoutés à la solution de précipitation aqueuse sous la forme d'un organosol miscible à l'eau et contenant les germes.

2. Procédé suivant la revendication 1, caractérisé en ce que des réactifs qui forment des germes sont ajoutés en quantité dosée pendant un temps de réaction à un solvant organique miscible à l'eau lors de la fabrication de l'organosol.

3. Procédé suivant la revendication 1 ou 2, caractérisé en ce que l'organosol est formé avec du diméthylformamide (DMF).

4. Procédé suivant la revendication 1 ou 2, caractérisé en ce que l'organosol est formé avec du diméthylsulfoxyde (DMSO).

5. Procédé suivant la revendication 1 ou 2, caractérisé en ce que l'organosol est formé avec de l'acétone.

6. Procédé suivant la revendication 3, caractérisé en ce que, pour la fabrication de l'organosol, de l'acétate de Cu(II) (anhydre) est dissous dans du DMF séché, qu'un mélange H₂S/Ar est introduit dans cette solution et que cette solution est ensuite filtrée.

7. Procédé suivant la revendication 3, caractérisé en ce que, pour la fabrication de l'organosol, du carbamate de N-diméthyldithiozinc (C₆H₁₂N₂S₄Zn) est dissous dans du DMF séché, que du H₂S est introduit dans la solution, laquelle est ensuite filtrée et à laquelle une solution de ZnSO₄ aqueuse est ajoutée, et qu'un mélange H₂S/Ar est ensuite introduit sous forte agitation.

8. Procédé suivant la revendication 5, caractérisé en ce que, pour la fabrication d'un sol de germe, une solution saturée de soufre et d'acétone est formée, laquelle est ensuite ajoutée à une solution de ZnS aqueuse.

9. Procédé suivant l'une quelconque des revendications 1 à 8, caractérisé en ce que l'organosol est ajouté à une solution de sel de zinc aqueuse pour la précipitation chimique par voie humide de ZnS sur les germes, et qu'un mélange H₂S/Ar est ensuite introduit.

10. Procédé suivant l'une quelconque des revendications 1 à 9, caractérisé en ce que les particules de ZnS obtenues sont séchées en une poudre et sont ensuite transformées en luminophores avec addition de dopants et/ou de soufre élémentaire, par chauffage en l'absence d'oxygène.
